# FASCICULE DE BREVET EUROPEEN

(11) **EP 3 422 233 B1**
(45) Date de publication et mention de la délivrance du brevet: **09.06.2021**
(21) Numéro de dépôt: 18305822.1
(22) Date de dépôt: 27.06.2018
(51) Int. Cl.: G06F 21/52, G06F 21/54

(54) **PROCÉDÉ DE PROTECTION D'UN DISPOSITIF ÉLECTRONIQUE EXÉCUTANT UN PROGRAMME CONTRE DES ATTAQUES PAR INJECTION DE FAUTE**
SCHUTZVERFAHREN EINER ELEKTRONISCHEN VORRICHTUNG, DIE EIN PROGRAMM GEGEN ANGRIFFE DURCH FEHLERINJEKTION AUSFÜHRT
METHOD FOR PROTECTING AN ELECTRONIC DEVICE RUNNING A PROGRAM AGAINST FAULT-INJECTION ATTACKS

(30) Priorité: 27.06.2017 FR 1755893
(43) Date de publication de la demande: 02.01.2019
(73) Titulaire: Idemia Identity & Security France, 92400 Courbevoie (FR)
(72) Inventeur: BRUGNON, Marc, 92400 Courbevoie (FR); BENCHETTRIT, MICHEL, 92400 Courbevoie (FR); BENHAMMAM, Abdelghani, 92400 Courbevoie (FR); BAILLY, Alexis, 92400 Courbevoie (FR)
(74) Mandataire: Regimbeau

(56) Documents cités:
- EP-A1- 1 881 404
- WO-A1-2008/125479

## Description

### DOMAINE TECHNIQUE GENERAL

L'invention concerne un procédé de protection d'un dispositif électronique exécutant un programme contre des attaques par injection de faute de type mises en œuvre sur une variable destinée à être utilisée par le programme.

### ETAT DE LA TECHNIQUE

De façon connue, une attaque par injection de faute consiste à perturber l'environnement physique d'un dispositif électronique qui exécute un programme, de sorte à modifier la valeur mémorisée par le dispositif d'une variable destinée à être utilisée par le programme. De telles perturbations peuvent être produites de différentes manières : variation d'une tension d'alimentation, variation d'une fréquence d'horloge du dispositif, émission de rayonnement électromagnétique ou laser, etc.

Pour protéger une variable contre une attaque par injection de faute, plusieurs types de contremesures existent.

Une première contremesure pour protéger une variable contre une attaque par injection de faute consiste à simplement dupliquer le contenu de la pile d'exécution dans une pile de sauvegarde. Pour vérifier l'intégrité d'une variable, on compare la valeur de la variable mémorisée dans la pile d'exécution et la valeur de sa copie dans la pile de sauvegarde. Si les deux valeurs comparées sont différentes, une faute est détectée.

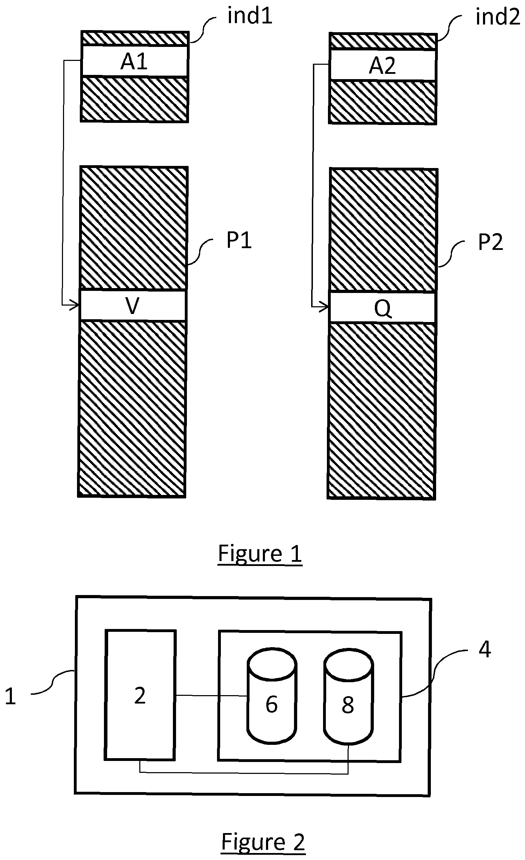

Une deuxième contremesure, décrite dans le document EP 1 960 934 B1, consiste à calculer une donnée de contrôle d'intégrité Q sur la variable et mémoriser cette donnée de contrôle d'intégrité dans une pile de contrôle dédiée. Pour appliquer ce principe de protection, deux piles indépendantes sont allouées dans la mémoire du dispositif, comme cela est représenté sur la **figure 1** :
- une pile d'exécution P1 contenant la valeur de chaque variable V destinée à être utilisée par le programme, et
- une pile de contrôle P2 contenant les données de contrôle d'intégrité Q sur chaque variable.

Sont également prévus deux registres d'index :
- un premier registre d'index ind1 contenant des données d'adressage A1 adaptées pour localiser les variables contenues dans la pile d'exécution P1, et
- un deuxième registre d'index ind2 contenant des données d'adressage A2 adaptées pour localiser les données de contrôle d'intégrité contenues dans la pile de contrôle P2.

Pour vérifier l'intégrité d'une variable, on lit la valeur courante de cette variable présente dans la pile d'exécution P1 (cette valeur étant localisée grâce à une donnée d'adressage associée à la variable, présente dans le premier registre d'index ind1), on met en oeuvre un calcul d'intégrité sur la base de la valeur lue et on compare le résultat de ce calcul à la donnée d'intégrité associée à la variable qui est présente dans la pile de contrôle (la donnée d'intégrité étant localisée grâce à une donnée d'adressage correspondante dans le deuxième registre d'index ind2). Si les deux valeurs comparées sont différentes, une faute est détectée.

On constate donc que pour protéger l'intégrité de données deux piles sont mises oeuvre. Une telle méthode est consommatrice de mémoire ce qui n'est pas souhaitable pour une carte à puce dont la mémoire est limitée.

EP1881404 A1 décrit un mécanisme de protection des variables d'un cadre de pile lors de l'exécution d'un application par une machine virtuelle à l'aide d'une donnée de contrôle globale dudit cadre de pile et de données de contrôle locales.

### PRESENTATION DE L'INVENTION

Un but de l'invention est de protéger une variable mémorisée dans une pile d'exécution contre des attaques par injection de faute moyennant une consommation de mémoire supplémentaire réduite.

A ce titre, l'invention concerne, un procédé de protection d'un dispositif électronique exécutant un programme contre des attaques par injection de faute de type susceptibles d'affecter le programme tel que décrit dans la revendication 1.

L'invention est avantageusement complétée par les caractéristiques suivantes, prises seules ou en une quelconque de leur combinaison techniquement possible :
- le calcul de la donnée de contrôle d'intégrité comprend des étapes de mémorisation dans la pile d'au moins une valeur d'une variable d'intégrité ; lecture dans la pile de ladite valeur mémorisée ; application de la fonction prédéterminée à l'au moins valeur mémorisée dont le résultat est la donnée de contrôle d'intégrité ; mémorisation de la donnée de contrôle d'intégrité ainsi obtenue ; lecture dans la pile de la donnée de contrôle d'intégrité obtenue ;
- la fonction prédéterminée est une opération d'addition d'une pluralité de variables d'intégrité ; une opération de soustraction d'une pluralité de variables d'intégrité ; une opération de multiplication d'une pluralité de variables d'intégrité ; une opération logique du type « OR », « AND », « XOR », « NOR ».

L'invention concerne également un produit programme d'ordinateur comprenant des instructions de code de programme pour l'exécution des étapes du procédé selon l'une des revendications précédentes, lorsque ce procédé est exécuté par au moins un processeur.

L'invention concerne enfin un dispositif électronique, tel qu'une carte à puce, comprenant : au moins un processeur configuré pour exécuter un programme, au moins une mémoire adaptée pour contenir une pile d'exécution, le dispositif étant caractérisé en ce que le processeur est configuré pour mettre en oeuvre un procédé selon l'invention.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels, outre la figure 1 déjà discutée :
- la figure 2 illustre schématiquement un dispositif électronique selon un mode de réalisation de l'invention ;
- la figure 3 illustre schématiquement le contenu des mémoires au cours de la mise en oeuvre d'un procédé selon l'invention ;
- la figure 4 illustre schématiquement des étapes d'un procédé selon l'invention.

Sur l'ensemble des figures les éléments similaires portent des références identiques.

### DESCRIPTION DETAILLEE DE L'INVENTION

En référence à la **figure 2****,** un dispositif électronique 1 comprend au moins un processeur 2 et au moins une mémoire 4.

La mémoire 4 comprend au moins une mémoire volatile 6, par exemple de type RAM. La mémoire volatile 6 a pour fonction de mémoriser temporairement des données, par exemple des données calculées par le processeur 2. Le contenu de la mémoire volatile 6 est effacé lors d'une mise hors tension du dispositif électronique 1.

La mémoire 4 comprend en outre au moins une mémoire non volatile 8, par exemple de type disque dur, SSD, flash, EEPROM, etc. La mémoire non volatile 8 a pour fonction de mémoriser des données de manière persistante, au sens où une mise hors tension du dispositif électronique 1 n'efface pas le contenu de la mémoire non volatile.

Le processeur 2 est adapté pour exécuter des instructions de code de programmes appartenant à un jeu d'instructions prédéterminé.

Par extension, le processeur 2 est adapté pour exécuter des programmes se présentant sous la forme d'un binaire compilé comprenant des instructions de codes appartenant à ce jeu d'instructions prédéterminé. On prendra l'exemple dans la suite des programmes de type machine virtuelle.

La machine virtuelle est configurée pour interpréter des programmes, les programmes se présentant sous la forme d'un binaire comprenant des instructions de code dans un format différent du jeu d'instruction précité, lorsque la machine virtuelle est exécutée par le processeur 2.

Par exemple, une machine virtuelle JavaCard est configurée pour interpréter un « *bytecode* » issu d'un code source dans le langage de programmation JavaCard, qui est un langage de programmation orienté objet.

On suppose dans la suite que la machine virtuelle est mémorisée dans la mémoire non volatile 8, de même qu'un programme interprétable par la machine virtuelle ainsi qu'un programme de contrôle.

Le dispositif électronique 1 est par exemple une carte à puce, telle qu'une carte SIM.

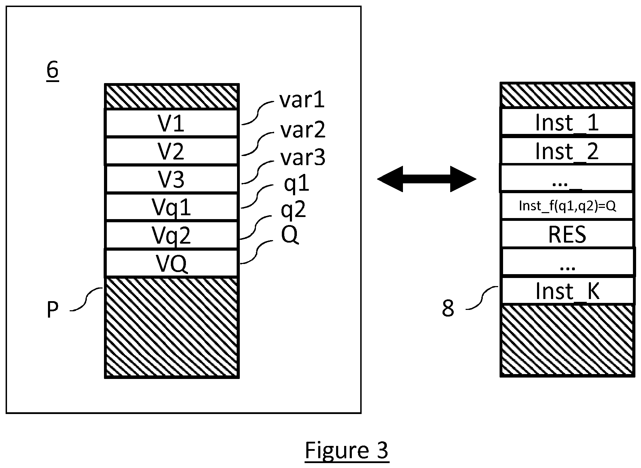

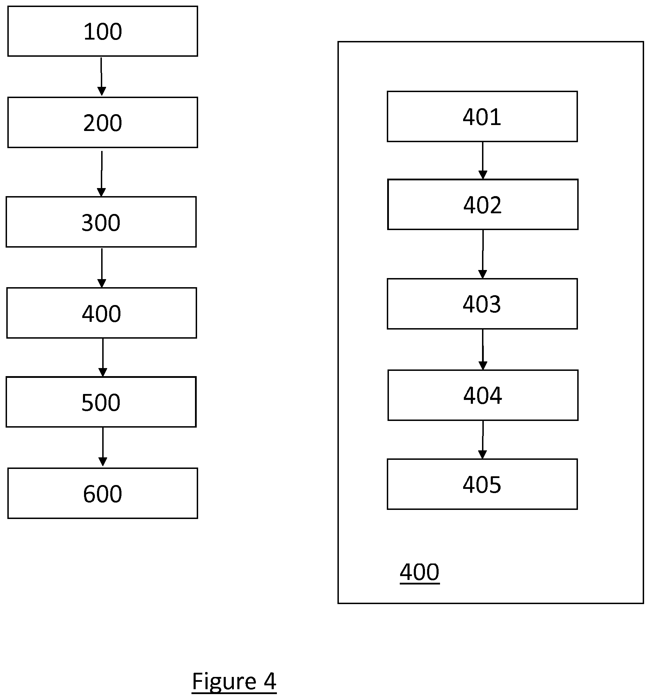

En relation avec les **figures 3** et **4****,** on décrit ci-après un procédé de protection d'un dispositif électronique 1 exécutant un programme contre des attaques par injection de faute de type susceptibles d'affecter le programme.

Le processeur 2 démarre 100 l'exécution de la machine virtuelle.

La machine virtuelle alloue 200 dans la mémoire volatile 6 une pile d'exécution P associée à un programme. Cette pile d'exécution P a pour vocation à contenir des variables dont le processus du programme a besoin au cours de son exécution.

On considère que le programme comprend des instructions de code pour mettre en oeuvre des étapes ci-dessous.

La pile d'exécution P est définie par une adresse pile dans la mémoire volatile 6, une taille, et une taille de mot adressable dans la pile P.

L'adresse de pile est une adresse de début de la pile P, ou bien une adresse de fin de la pile P.

Au cours de l'exécution 300 du programme par la machine virtuelle, cette dernière commande la mémorisation ou la lecture de plusieurs variables var1, var2, var3 dans la mémoire volatile 6. Chaque variable a une valeur V1, V2, V3. Sur la figure 3 trois variables sont représentées à titre d'exemple.

Le programme est quant à lui stockée dans la mémoire non volatile 8 sous forme d'instructions de code Inst_1, Inst_2, ..., Inst_K. Ces instructions de code commandent au besoin la lecture/mémorisation des variables dans la mémoire volatile 6.

Au cours de l'exécution de ce programme, en outre, un calcul 400 d'une donnée de contrôle d'intégrité Q par application d'au moins une fonction prédéterminée à au moins une variable d'intégrité q1, q2 est mis en oeuvre. Ce calcul est stockée sous la forme d'une instructions de code Inst_f(q1, q2)=Q et utilise les variables q1, q2 dont le résultat est la donne de contrôle d'intégrité Q.

Chaque variable d'intégrité q1, q2 et la donnée de contrôle d'intégrité Q ont une valeur mémorisée dans la pile P, respectivement Vq1, Vq2, VQ.

Un tel calcul est exécuté de manière aléatoire au cours de l'exécution du programme dont les instructions sont stockées dans la mémoire non volatile 8.

En particulier, la fréquence d'exécution du calcul est déterminée par un intervalle dans lequel une valeur aléatoire R est prise afin de de lancer l'exécution du calcul au bout de R instruction(s). Cette valeur R est rafraichie de manière aléatoire dans cet intervalle à la fin de chaque calcul.

De manière préférée, le calcul 400 de la donnée de contrôle d'intégrité Q comprend des étapes de
- mémorisation 401 dans la pile (P) d'au moins une valeur Vq1, Vq2 d'une variable d'intégrité q1, q2 ;
- lecture 402 dans la pile P de ladite valeur mémorisée ;
- application 403 de la fonction prédéterminée à l'au moins valeur mémorisée dont le résultat est la donnée de contrôle d'intégrité Q de valeur VQ ;
- mémorisation 404, dans la pile P de la donnée de contrôle d'intégrité Q ainsi obtenue ;
- lecture 405 dans la pile de la donnée de contrôle d'intégrité Q obtenue.

Ces étapes sont en soit classique dans la l'utilisation de la pile au cours du programme.

Toutefois, dans une étape ultérieure, on compare 500 la donnée de contrôle d'intégrité Q obtenue à un résultat attendu RES stockée dans la mémoire non volatile 8.

En effet, le calcul de la donnée de contrôle d'intégrité doit retourner un résultat déterminé à l'avance, la fonction prédéterminée, et les variables d'intégrité étant fixées à l'avance.

De fait, cette étape de comparaison 500 permet de signaler 600 ou pas une erreur en fonction du résultat de la comparaison.

En particulier une erreur est signalée si la valeur VQ de la donnée de contrôle d'intégrité Q est différente du résultat attendu.

Une erreur est significative d'une attaque sur la pile P. En effet une attaque sur la pile peut entrainer une modification des données d'entrée et/ou du résultat attendu, etc. qui conduira systématiquement à un résultat erroné suite à l'application de la fonction prédéterminée.

Une fonction prédéterminée peut consister à l'une des opérations suivantes :
- une opération d'addition d'une pluralité de variables d'intégrité ;
- une opération de soustraction d'une pluralité de variables d'intégrité ;
- une opération de multiplication d'une pluralité de variables d'intégrité ;
- une opération logique du type « OR », « AND », « XOR », « NOR ».

D'autres fonctions prédéterminées utilisant l'environnement de la machine virtuelle peuvent aussi être mises en oeuvre :
- opération de lecture objet en mémoire volatile ;
- opération d'écriture objet en mémoire volatile ;
- opération de lecture objet en mémoire non volatile ;
- opération d'écriture objet en mémoire non volatile.

## Revendications

1. Procédé de protection d'un dispositif électronique (1) exécutant un programme contre des attaques par injection de faute de type susceptibles d'affecter le programme, l'exécution du programme mettant en œuvre une pile (P) dans laquelle des variables (var1, var2, var3) utilisées par le programme sont lues et/ou mémorisées,
le procédé comprenant, au cours de l'exécution dudit programme, une étape de calcul (400) d'une donnée (Q) de contrôle d'intégrité par :
- application (403) d'au moins une fonction prédéterminée à au moins une valeur (Vq1, Vq2) d'une variable d'intégrité (q1, q2), la valeur (Vq1, Vq2) de la variable d'intégrité ayant préalablement été mémorisée dans la pile (P), et
- mémorisation (404) d'une valeur (VQ) de la donnée de contrôle d'intégrité (Q) ainsi obtenue dans la même pile (P),
le calcul (400) de la donnée(Q) de contrôle d'intégrité étant mis en œuvre à intervalle aléatoire au cours de l'exécution du programme,
le procédé comprenant en outre la comparaison de la donnée de contrôle d'intégrité obtenue à un résultat déterminé à l'avance (RES) et un signalement ou non d'une erreur en fonction du résultat de la comparaison.

2. Procédé selon la revendication 1, dans lequel le calcul (400) de la donnée de contrôle d'intégrité comprend des étapes de
- mémorisation (401) dans la pile (P) de la valeur (V) de la variable d'intégrité ;
- lecture (402) dans la pile (P) de ladite valeur mémorisée ;
- application (403) de la fonction prédéterminée à l'au moins valeur mémorisée dont le résultat est la donnée de contrôle d'intégrité ;
- mémorisation (404) dans la pile (P) de la valeur (VQ) de la donnée de contrôle d'intégrité ainsi obtenue ;
- lecture (405) dans la pile de la donnée de contrôle d'intégrité obtenue.

3. Procédé selon l'une des revendications précédentes, dans lequel ladite fonction prédéterminée est
- une opération d'addition d'une pluralité de variables d'intégrité ;
- une opération de soustraction d'une pluralité de variables d'intégrité ;
- une opération de multiplication d'une pluralité de variables d'intégrité ;
- une opération logique du type « OR », « AND », « XOR », « NOR ».

4. Produit programme d'ordinateur comprenant des instructions de code de programme pour l'exécution des étapes du procédé selon l'une des revendications précédentes, lorsque ce procédé est exécuté par au moins un processeur (2).

5. Dispositif électronique, tel qu'une carte à puce, comprenant :
• au moins un processeur (2) configuré pour exécuter un programme,
• au moins une mémoire (4) adaptée pour contenir une pile d'exécution (P),
le dispositif étant **caractérisé en ce que** le processeur (2) est configuré pour mettre en œuvre un procédé selon l'une des revendications 1 à 3.

## Patentansprüche

1. Verfahren zum Schutz einer elektronischen Vorrichtung (1), die ein Programm gegen Angriffe durch Fehlerinjektion von dem Typ ausführt, die das Programm beeinträchtigen können, wobei die Ausführung des Programms einen Stapel (P) einsetzt, in dem Variablen (var1, var2, var3), die von dem Programm verwendet werden, gelesen und/oder gespeichert werden,
wobei das Verfahren während der Ausführung des Programms einen Schritt umfasst zur Berechnung (400) eines Integritätskontroll-Datenelements (Q) durch:
- Anwendung (403) mindestens einer vorbestimmten Funktion auf mindestens einen Wert (Vq1, Vq2) einer Integritätsvariablen (q1, q2), wobei der Wert (Vq1, Vq2) der Integritätsvariablen vorhergehend in dem Stapel (P) gespeichert wurde, und
- Speicherung (404) eines Werts (VQ) des so erhaltenen Integritätskontroll-Datenelements (Q) in demselben Stapel (P),
wobei die Berechnung (400) des Integritätskontroll-Datenelements (Q) mit einem zufälligen Intervall während der Ausführung des Programms eingesetzt wird,
wobei das Verfahren ferner den Vergleich des erhaltenen Integritätskontroll-Datenelements mit einem im Voraus bestimmten Ergebnis (RES) und die Meldung oder Nichtmeldung eines Fehlers in Abhängigkeit von dem Ergebnis des Vergleichs umfasst.

2. Verfahren nach Anspruch 1, wobei die Berechnung (400) des Integritätskontroll-Datenelements die folgenden Schritte umfasst:
- Speicherung (401) des Werts (V) der Integritätsvariablen in dem Stapel (P);
- Lesen (402) des gespeicherten Werts in dem Stapel (P),
- Anwendung (403) der vorbestimmten Funktion auf den mindestens einen gespeicherten Wert, dessen Ergebnis das Integritätskontroll-Datenelement ist;
- Speicherung (404) des Werts (VQ) des so erhaltenen Integritätskontroll-Datenelements in dem Stapel (P);
- Lesen (405) des erhaltenen Integritätskontroll-Datenelements in dem Stapel.

3. Verfahren nach einem der vorhergehenden Ansprüche, wobei die vorbestimmte Funktion ist:
- eine Operation zur Addition einer Vielzahl von Integritätsvariablen;
- eine Operation zur Subtraktion einer Vielzahl von Integritätsvariablen;
- eine Operation zur Multiplikation einer Vielzahl von Integritätsvariablen;
- eine logische Operation vom Typ "OR", "AND", "XOR", "NOR".

4. Computerprogrammprodukt, das Programmcodeanweisungen für die Ausführung der Schritte des Verfahrens nach einem der vorhergehenden Ansprüche umfasst, wenn dieses Verfahren durch mindestens einen Prozessor (2) ausgeführt wird.

5. Elektronische Vorrichtung, wie eine Chipkarte, die umfasst:
• mindestens einen Prozessor (2), der dazu ausgestaltet ist, ein Programm auszuführen,
• mindestens einen Speicher (4), der geeignet ist, einen Ausführungsstapel (P) zu enthalten,
wobei die Vorrichtung **dadurch gekennzeichnet ist, dass** der Prozessor (2) dazu ausgestaltet ist, ein Verfahren nach einem der Ansprüche 1 bis 3 einzusetzen.

## Claims

1. A method for protecting an electronic device (1) executing a program against fault injection attacks of the type likely to affect the program, the execution of the program implementing a stack (P) in which variables (var1, var2, var3) used by the program are read and/or stored,
the method comprising, during the execution of said program, a step of calculating (400) an integrity check data (Q) by:
- applying (403) at least one predetermined function to at least one value (Vq1, Vq2) of an integrity variable (q1, q2), the value (Vq1, Vq2) of the integrity variable having been previously stored in the stack (P), and
- storing (404) a value (VQ) of the integrity check data (Q) thus obtained in the same stack (P),
the calculation (400) of the integrity check data (Q) being implemented at random interval during the execution of the program,
the method further comprising the comparison of the obtained integrity check data with a result determined in advance (RES) and a report or not of an error according to the result of the comparison.

2. The method according to claim 1, wherein the calculation (400) of the integrity check data comprises steps of:
- storing (401) in the stack (P) the value (V) of the integrity variable;
- reading (402) in the stack (P) said stored value;
- applying (403) the predetermined function to the at least one stored value whose result is the integrity check data;
- storing (404) in the stack (P) the value (VQ) of the thus obtained integrity check data;
- reading (405) in the stack the obtained integrity check data.

3. The method according to any of the preceding claims, wherein said predetermined function is:
- an operation of adding a plurality of integrity variables;
- an operation of subtracting a plurality of integrity variables;
- an operation of multiplying a plurality of integrity variables;
- a logical operation of the type "OR", "AND", "XOR", "NOR".

4. A computer program product comprising program code instructions for executing the steps of the method according to any of the preceding claims, when this method is executed by at least one processor (2).

5. An electronic device, such as a smart card, comprising:
• at least one processor (2) configured to execute a program,
• at least one memory (4) adapted to contain an execution stack (P),
the device being **characterized in that** the processor (2) is configured to implement a method according to any of claims 1 to 3.
